# EUROPEAN PATENT SPECIFICATION

(11) **EP 4 455 555 B1**
(45) Date of publication and mention of the grant of the patent: **15.07.2026**
(21) Application number: 22910906.1
(22) Date of filing: 07.12.2022
(51) Int. Cl.: F23N 5/24, F23N 5/08, F23D 14/82

(54) **COMBUSTION APPARATUS AND HOT WATER APPARATUS PROVIDED WITH SAME**
VERBRENNUNGSVORRICHTUNG UND HEISSWASSERVORRICHTUNG DAMIT
APPAREIL DE COMBUSTION ET APPAREIL À EAU CHAUDE ÉQUIPÉ DE CELUI-CI

(30) Priority: 21.12.2021 JP 2021206815
(43) Date of publication of application: 30.10.2024
(73) Proprietor: Noritz Corporation, Kobe-shi Hyogo 6500033 (JP)
(72) Inventor: UMAKOSHI, Ryosuke, Kobe-shi Hyogo 650-0033 (JP); NAGAI, Itsuo, Kobe-shi Hyogo 650-0033 (JP)
(74) Representative: Becker, Eberhard
(86) International application number: PCT/JP2022/045108
(87) International publication number: WO 2023/120194

(56) References cited:
- JP-A- 2000 274 613
- JP-A- 2017 198 378
- JP-A- 2019 132 561
- JP-A- 2019 132 561
- JP-B2- 3 100 328
- JP-U- S 564 759

## Description

### Technical Field

The present invention relates to a combustion apparatus, and a hot water apparatus such as a water heater that is provided with the combustion apparatus.

### Related Art

A specific example of a combustion apparatus is described in Patent Document 1. The combustion apparatus described in this document includes a porous combustion plate having a plurality of air vents (burner ports). A mixed gas of fuel gas and air is supplied to the combustion plate. The fuel gas in the mixed gas that has permeated to the outside of the combustion plate can be combusted on the outside of the combustion plate. A light amount detection means is provided on an upper wall of a supply channel of the mixed gas of fuel gas and air. When a backfire occurs, the occurrence can be detected by utilizing the light amount detection means. The backfire may cause an accident such as equipment damage. With respect to this, according to the aforesaid configuration, it is possible to detect the occurrence of a backfire when the backfire occurs and to take an appropriate measure.

However, the aforesaid conventional technology has problems to be solved, as described below.

That is, the light amount detection means is provided so that the light from the combustion plate is incident thereon. The light amount detection means may not only detect a backfire when the backfire occurs, but may also detect light of a flame that occurs during normal combustion of fuel gas. Accordingly, even if normal combustion actually occurs, there is a risk that false detection of a backfire based on detection of the light of a flame in the normal combustion may occur. Conversely, even if a backfire occurs, there is a risk that the light detected at that time may be mistakenly determined to be light from a flame during the normal combustion, and the backfire may be overlooked. It is desirable to suitably eliminate such false detection.

The backfire occurs in the case where a supply rate of the mixed gas becomes less than a combustion rate of the fuel gas. With respect to this, in recent years, measures to realize a low-carbon society have been promoted from the viewpoint of protecting the natural environment, and the measures include using hydrogen as the fuel gas. However, hydrogen has a much faster combustion rate than city gas or liquefied petroleum (LP) gas that are often used as fuel gas. Hence, if hydrogen is used as the fuel gas, the possibility of backfire occurring may increase. In view of this situation, there is a great need to improve accuracy of backfire detection.

In the aforesaid conventional technology, when a backfire occurs, there is a risk that its flame may travel toward the light amount detection means. This may result in thermal damage to the light amount detection means, and there is a risk that it may then become difficult to detect a backfire by utilizing this light amount detection means. In such a case, it becomes necessary to replace a component of the light amount detection means. However, this places a burden on a user in terms of work or money in component replacement.

### Prior-Art Documents

### Patent Documents

Patent Document 1: Japanese Patent No. 3100328
Patent Document 2: Japanese Utility Model Laid-open No. S56-4759
JP 2019 132561 A is related to a flame detection device including a flame detection sensor for detecting the flame in a burner element of a burner, and a thermal expansion member arranged between the flame detection sensor and the burner element, and thermally expanding by a backfire which has entered from the burner element.
JP 2017 198378 A is related to a boiler provided with a flame detection device for detecting a flame.
JP 2000 274613 A is related to a sensor for detecting light, pressure, or sound in a burner casing or vibration of the burner casing; and a backfire detection means for detecting occurrence of backfire based upon detected light, pressure, sound, or vibration.

### SUMMARY OF THE INVENTION

### Problems to Be Solved by the Invention

An object of the present invention is to provide a combustion apparatus and a hot water apparatus provided with the combustion apparatus, in which the combustion apparatus makes it possible to eliminate false detection of backfire, to improve accuracy of backfire detection, and to suitably suppress a defect that a component may suffer thermal damage caused by a flame of a backfire.

### Means for Solving the Problems

In order to solve the above problems, the following technical measures are taken in the present invention.

A combustion apparatus provided by a first aspect of the present invention includes : a combustion part, for combusting fuel gas; a mixed gas supply channel, for supplying a mixed gas of the fuel gas and air to the combustion part; a flame sensor, provided in a position within the mixed gas supply channel or facing the mixed gas supply channel and being able to, in the event of a backfire from the combustion part to the mixed gas supply channel, optically detect a flame of the backfire; and a shielding part, preventing the flame of the backfire from reaching the flame sensor from the combustion part, and preventing light of a flame during normal combustion from traveling from the combustion part to the flame sensor.

Preferably, the shielding part includes a partition wall provided to provide a partition between the combustion part and the flame sensor.

Preferably, the shielding part includes a cover member that surrounds a periphery of the flame sensor and partially has an opening that opens toward an upstream side in a mixed gas flow direction of the mixed gas supply channel. When the flame of the backfire travels into an area in the mixed gas supply channel facing the opening, light of the flame is detected by the flame sensor.

Preferably, the mixed gas supply channel includes: a first area, as an area close to an end that is adjacent to an entire area of the combustion part so that the mixed gas is supplied to the entire area of the combustion part; and a second area, having a smaller width than the first area, connected to one end in a width direction of the first area, arranged in a position shifted from a center of the combustion part in the width direction, and allowing the mixed gas to flow toward the first area. The flame sensor is arranged in a position corresponding to the second area and offset from the combustion part in the width direction, and is able to, when a flame of a backfire travels into the second area, detect light of the flame.

Preferably, the shielding part includes a cover member that surrounds a periphery of the flame sensor and partially has an opening that opens toward the second area. When the flame of the backfire travels into a position in the second area facing the opening, light of the flame is configured to be detected by the flame sensor.

Preferably, the shielding part includes a holder that holds the flame sensor. The holder is able to prevent the flame of the backfire and the light of the flame during normal combustion of the combustion part from traveling directly to the flame sensor, and enables light of the flame of the backfire that has traveled to the second area to reach the flame sensor and be detected.

Preferably, the combustion part is composed using a combustion plate having a plurality of burner ports, and is arranged at an end part of the mixed gas supply channel.

Preferably, the combustion apparatus includes a case having the mixed gas supply channel formed inside. The combustion plate is supported by a support wall of a frame shape in a portion in the case that corresponds to the end part of the mixed gas supply channel, and a periphery of the combustion plate is closed by the support wall.

Preferably, the flame sensor is inserted into the case from outside so as to penetrate a sidewall of the case, and is arranged in a position overlapping the support wall in a vertical height direction while not overlapping the combustion part. The shielding part includes a partition wall standing up in the vertical height direction from the support wall so as to provide a partition between the combustion part and the flame sensor.

A hot water apparatus provided by a second aspect of the present invention includes the combustion apparatus provided by the first aspect of the present invention.

Other features and advantages of the present invention will become apparent from the following description of the embodiments of the invention with reference to the accompanying drawings.

### BRIEF DESCRIPTION OF THE DRAWINGS

FIG. 1A is a schematic cross-sectional view of a main part, schematically showing one example of a combustion apparatus and a hot water apparatus including the combustion apparatus according to the present invention; FIG. 1B is a cross-sectional view taken along IB-IB of FIG. 1A.
FIG. 2A is a schematic cross-sectional view of a main part, schematically showing another example of a combustion apparatus and a hot water apparatus including the combustion apparatus according to the present invention; FIG. 2B is a cross-sectional view taken along IIA-IIA of FIG. 2A.
FIG. 3 is a schematic cross-sectional view of a main part, schematically showing another example of a combustion apparatus and a hot water apparatus including the combustion apparatus according to the present invention.

### DESCRIPTION OF THE EMBODIMENTS

Hereinafter, preferred embodiments of the present invention will be described in detail with reference to the drawings.

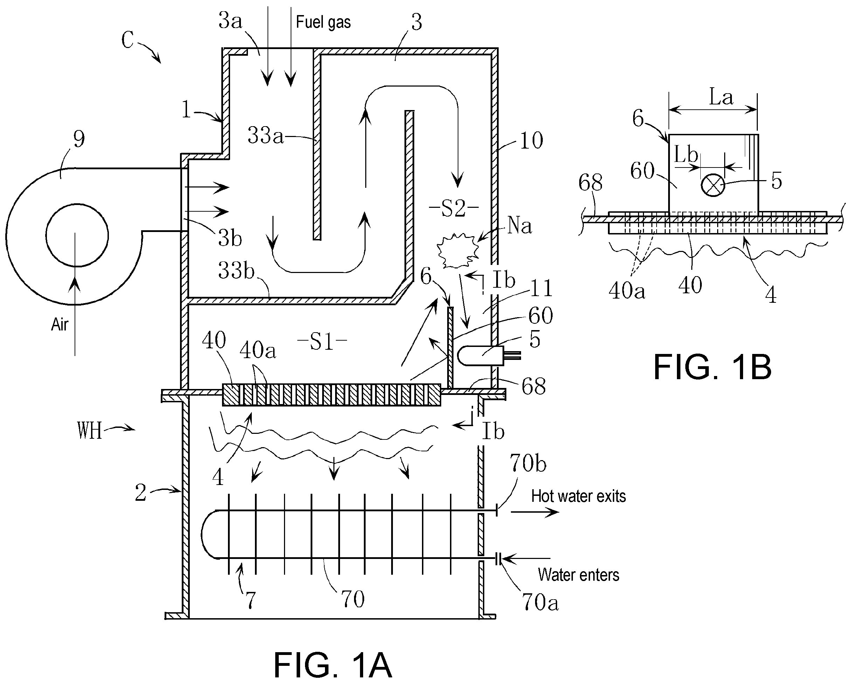

A combustion apparatus C shown in FIG. 1A is used as a component of a hot water apparatus WH described later. The combustion apparatus C includes a first case 1 and a second case 2, a mixed gas supply channel 3 formed within the first case 1, a combustion part 4 composed using a combustion plate 40, a flame sensor 5 for backfire detection, and a shielding part 6 for flames and light. The first case 1 corresponds to an example of a "case having a mixed gas supply channel formed inside" as mentioned in the present invention.

The hot water apparatus WH further includes, in addition to the combustion apparatus C, a heat exchanger 7 arranged within the second case 2. The heat exchanger 7 includes a heat transfer pipe 70 having a water inlet 70a and a hot water outlet 70b. Heat is recovered by the heat exchanger 7 from combustion gas generated by the combustion part 4. Accordingly, hot water fed from the water inlet 70a into the heat exchanger 7 is heated to generate hot water, and this hot water is discharged from the hot water outlet 70b to a desired hot water supply destination.

The mixed gas supply channel 3 is a supply channel where fuel gas and air that are supplied into the first case 1 from a fuel gas supply port 3a and an air supply port 3b provided in the first case 1 are mixed with each other, and a resulting mixed gas is guided to the combustion part 4. The fuel gas is, for example but not limited to, hydrogen or a hydrogen-containing gas, and may be other types of gas, such as city gas or **LP** gas. The air is supplied to the mixed gas supply channel 3 by taking in outside air using a fan 9. The mixed gas supply channel 3 is formed by utilizing a plurality of walls 33a and 33b, and is of a serpentine shape in a front cross-sectional view or a side cross-sectional view. This is preferable in terms of promoting stirring and mixing of the fuel gas and the air.

The combustion part 4 is a portion where the fuel gas in the aforesaid mixed gas is combusted. The combustion part 4 includes the combustion plate 40 arranged at an end part of the mixed gas supply channel 3. The combustion plate 40 is a heat-resistant plate provided with a plurality of air vents 40a (burner ports). An ignition plug (not shown) is provided in a position in the vicinity of a lower surface side of the combustion plate 40. The fuel gas in the mixed gas that has passed downward through the plurality of air vents 40a is combusted in an area on the lower surface side of the combustion plate 40. The combustion gas travels toward the heat exchanger 7 described above. The combustion plate 40 is attached to both or one of the first case 1 and the second case 2 by utilizing a support wall 68 of a frame shape. The support wall 68 closes a periphery of the combustion plate 40 at the end part of the mixed gas supply channel 3. The combustion plate 40 may have, in addition to a configuration in which burner ports are provided in a plate material, a configuration in which burner ports are provided in a metal knit or metal fibers.

The flame sensor 5 is for optically detecting a flame of a backfire in the event of a backfire from the combustion part 4 to the mixed gas supply channel 3, and is, for example, an ultraviolet sensor. The flame sensor 5 is of, for example, an omnidirectional type, but may alternatively be of a directional type. A detection signal output from the flame sensor 5 is input to a controller (not shown) that controls the combustion apparatus C and the hot water apparatus WH. The flame sensor 5 is inserted into the first case 1 from the outside thereof in the form of penetrating a sidewall 10 of the first case 1, and is arranged within the mixed gas supply channel 3 so as to be located above the support wall 68. The flame sensor 5 is not arranged to overlap above the combustion part 4.

The shielding part 6 is a portion where the travel of each of a flame of a backfire from the combustion part 4 to the flame sensor 5 and the light of a flame during normal combustion is prevented. The shielding part 6 includes a partition wall 60 standing upward from the support wall 68 so as to provide a partition between the combustion part 4 and the flame sensor 5. A portion of the support wall 68 also provides a partition between the combustion part 4 and the flame sensor 5, thus preventing the travel of each of the flame of the backfire from the combustion part 4 toward the flame sensor 5 and the light of the flame during normal combustion. Accordingly, in the present embodiment, a structure in which a portion of the support wall 68 is combined with the partition wall 60 constitutes the shielding part 6. The shielding part 6 has heat resistance and light blocking properties. As shown in FIG. 1B, it is sufficient if a width La of the partition wall 60 is larger than a width Lb or a diameter of the flame sensor 5 to some extent or more.

The mixed gas supply channel 3 includes a first area S1 and a second area S2. The first area S1 is an area close to an end that is adjacent to an upper side of the entire area of the combustion part 4 so that the mixed gas is supplied to the entire area of the combustion part 4. In contrast, the second area S2 has a smaller width (width in a left-right direction in FIG. 1A) than the first area S1 and is connected to one end in a width direction of the first area S1. Furthermore, the second area S2 is arranged in a position shifted from the center of the combustion part 4 in the width direction and extends in a vertical height direction. The mixed gas passes through the second area S2, then flows into the first area S1, and then passes through the plurality of burner ports 40a of the combustion part 4 (combustion plate 40).

The partition wall 60 constituting the shielding part 6 is located at a boundary portion between the first area S1 and the second area S2 so that the boundary portion is not completely closed. The flame sensor 5 is arranged so as to be shifted with respect to the combustion part 4 in the same direction as a shift direction of the second area S2. Between the partition wall 60 and the sidewall 10 of the first case 1, a gap 11 is formed that allows the flame sensor 5 to face the second area S2. As indicated by symbol Na, when a flame of a backfire travels into the second area S2, ultraviolet light emitted from the flame passes through the gap 11, reaches the flame sensor 5, and is detected.

Preferably, the light of the flame during normal combustion in the combustion part 4 is reflected by an inner surface of the first case 1 or the wall 33b, and is thereby prevented or suppressed from reaching the flame sensor 5. As a means for the above purpose, an area with the aforesaid light may come into contact is set as, for example, a light reflection prevention area having low ultraviolet reflectance, such as a coating area having ultraviolet absorption properties. As a means of preventing light reflection, in addition to coating mentioned above, a plating treatment or a surface roughening treatment, for example, can also be adopted.

Next, functions of the combustion apparatus C and the hot water apparatus WH will be described.

In the combustion part **4,** when the fuel gas in the mixed gas is normally combusted, the light (ultraviolet light) of a flame occurring at that time is prevented by the shielding part 6 from traveling from the combustion part 4 toward the flame sensor 5. Hence, the light of the flame will not be detected by the flame sensor 5, and the risk of the light of the flame during normal combustion being falsely detected as light of a flame of a backfire can be suitably eliminated.

On the other hand, when a supply rate of the mixed gas becomes less than a combustion rate of the fuel gas, a backfire occurs. In this case, the flame of the backfire is prevented by the shielding part 6 from directly traveling from the combustion part 4 toward the flame sensor 5. Accordingly, it can be prevented that the flame sensor 5 comes into contact with the flame of the backfire and breaks down (suffers thermal damage), and backfire detection using the flame sensor 5 can be suitably continued. According to the present embodiment, since breakdown of the flame sensor 5 due to backfire can be prevented, labor or economic burdens required for repairing the flame sensor 5 can be reduced.

In the event of a backfire, the flame thereof moves toward an upstream side in a mixed gas flow direction through the mixed gas supply channel 3, moves from the first area S1 to the second area S2 of the mixed gas supply channel 3, and reaches, for example, the position indicated by the symbol Na in FIG. 1A. Then, the light (ultraviolet light) emitted from the flame of the backfire is suitably received and detected by the flame sensor 5. Accordingly, a determination is made in the aforesaid controller that a backfire has occurred, and a measure may be taken.

As described above, a backfire is detected at the time when a flame of the backfire travels into the second area S2. With respect to this, the second area S2 has a small width. The flame sensor 5 is arranged so as to directly face the second area S2. Accordingly, it is possible to reliably receive and detect the flame of the backfire by the flame sensor 5, and to improve the accuracy of backfire detection.

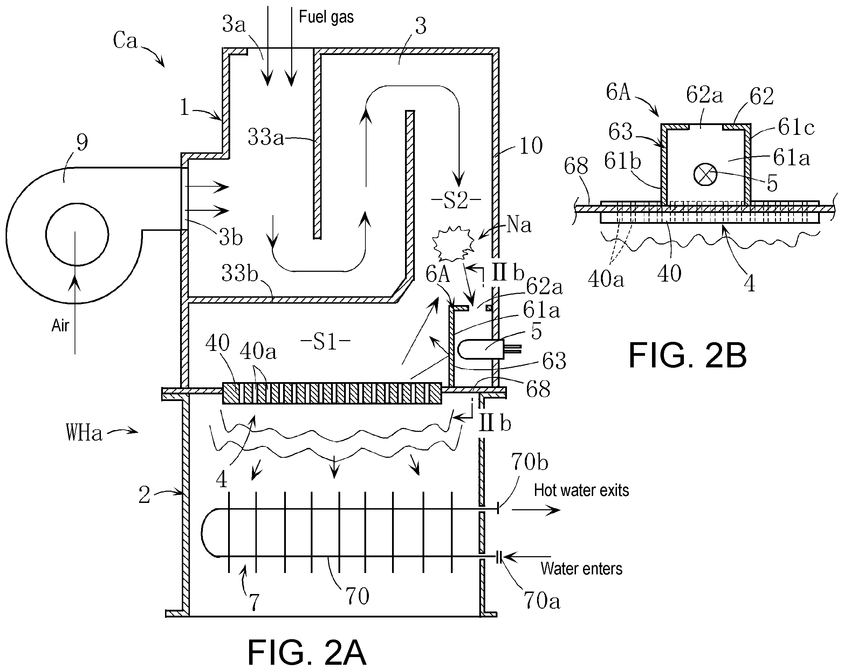

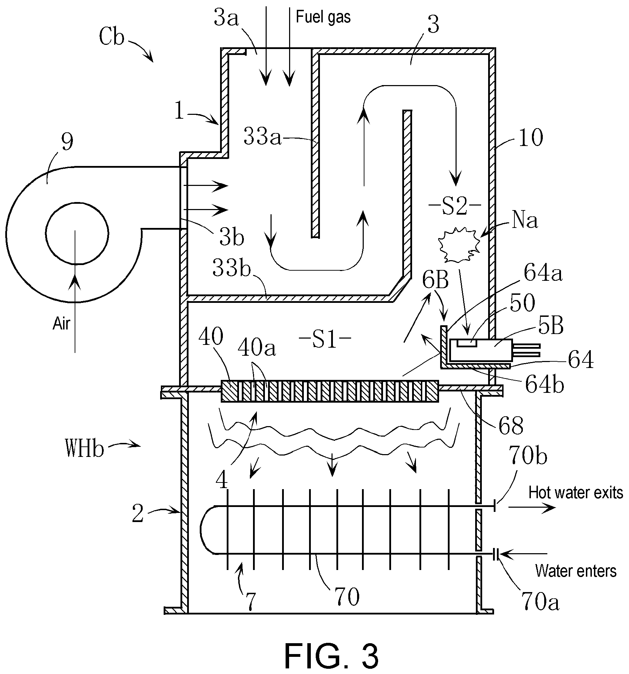

FIG. 2A, FIG. 2B and FIG. 3 show other embodiments of the present invention. In these drawings, elements that are the same as or similar to those in the above embodiment are assigned the same reference numerals as in the above embodiment, and repeated descriptions will be omitted.

In a combustion apparatus Ca and a hot water apparatus WHa shown in FIG. 2A and FIG. 2B, a shielding part 6A includes a cover member 63, the cover member 63 having: a plurality of sidewalls 61a to 61c, surrounding a periphery of the flame sensor 5, and an upper wall 62, formed with an opening 62a that opens upward. The opening 62a faces the second area S2 of the mixed gas supply channel 3. The sidewall 61a corresponds to the partition wall 60 of the embodiment shown in FIG. 1A and FIG. 1B.

According to the present embodiment, since the flame sensor 5 is surrounded by the cover member 63 of the shielding part 6A, the flame sensor 5 can be relatively reliably prevented from being exposed to a flame of the backfire. Accordingly, breakdown of the flame sensor 5 is relatively thoroughly prevented. The light of the flame during normal combustion in the combustion part 4 is relatively thoroughly prevented from being detected by the flame sensor 5.
On the other hand, when the flame of the backfire travels to the second area S2 of the mixed gas supply channel 3, this flame can be reliably detected by the flame sensor 5. Similarly to the above embodiment, it is possible to improve the accuracy of backfire detection.

In a combustion apparatus Cb and a hot water apparatus WHb shown in FIG. 3, a shielding part 6B is configured as a holder 64 that holds a flame sensor 5B. Since the holder 64 is inserted into the first case 1 from the outside thereof, the holder 64 is also located within the first case 1. The holder 64 includes a sidewall 64a and a lower wall 64b that prevent a flame of the backfire or the light of the flame during normal combustion from traveling from the combustion part 4 toward the flame sensor 5B. The flame sensor 5B is of, for example, a directional type in which a UV detector 50 is provided in a portion of an upper surface of the flame sensor 5B and which detects only ultraviolet light traveling downward from above.

In the present embodiment, by the holder 64 of the shielding part 6B, the flame sensor 5B can be prevented from being exposed to a flame of the backfire. In addition, while the light (ultraviolet light) of the flame during normal combustion in the combustion part 4 can be prevented from being detected by the flame sensor 5B, a flame of the backfire that has traveled to the second area S2 can be suitably detected. Since the flame sensor 5B has directivity in UV detection, even if the light of the flame during normal combustion in the combustion part 4 reaches the flame sensor 5B by being reflected at each part within the first case 1, this light can be made undetected. However, in the embodiment shown in FIG. 3, it is possible to use a flame sensor that does not have directivity in detection. The holder 64 may also be in the form of a case that wraps the flame sensor 5B.

The present invention is not limited to the content of the embodiment described above. The specific configurations of each part of the combustion apparatus and the hot water apparatus according to the present invention can be freely designed and modified in various ways within the intended scope of the present invention.

It is sufficient that the shielding part in the present invention has a configuration making it possible to prevent the travel of each of a flame of the backfire and the light of the flame during normal combustion from the combustion part to the flame sensor, and the specific shape, size, material, position, number or the like thereof can be changed in various ways.
The flame sensor is not limited to an ultraviolet sensor. The flame sensor may be of a type that detects, in addition to ultraviolet light, visible light or infrared light emitted from a flame of the backfire, either individually or in combination. In short, the flame sensor may be any sensor capable of optically detecting a flame of the backfire.
The position where the flame sensor is provided may be a position facing the mixed gas supply channel instead of within the mixed gas supply channel.
The type of the fuel gas is not limited.
The combustion apparatus according to the present invention is not limited to being used for a hot water apparatus, and may also be a combustion apparatus used for other purposes, such as for heating or incineration. The combustion apparatus is not limited to being of a downward combustion type, but may be of, for example, an upward combustion type, or a horizontal combustion type as described in Patent Document 1.

## Claims

1. A combustion apparatus (C, Ca, Cb) comprising:
a combustion part (4), for combusting fuel gas;
a mixed gas supply channel (3), for supplying a mixed gas of the fuel gas and air to the combustion part (4); and
a flame sensor (5, 5B), provided in a position within the mixed gas supply channel (3) or facing the mixed gas supply channel (3) and being able to, in the event of a backfire from the combustion part (4) to the mixed gas supply channel (3), optically detect a flame of the backfire;
the combustion apparatus (C, Ca, Cb) being **characterized by** further comprising:
a shielding part (6, 6A, 6B), preventing the flame of the backfire from reaching the flame sensor (5, 5B) from the combustion part (4), and preventing light of a flame during normal combustion from traveling from the combustion part (4) to the flame sensor (5, 5B).

2. The combustion apparatus (C, Ca, Cb) according to claim 1, wherein
the shielding part (6, 6A, 6B) comprises a partition wall (60) provided to provide a partition between the combustion part (4) and the flame sensor (5, 5B).

3. The combustion apparatus (C, Ca, Cb) according to claim 1, wherein
the shielding part (6, 6A, 6B) comprises a cover member (63) that surrounds a periphery of the flame sensor (5, 5B) and partially has an opening (62a) that opens toward an upstream side in a mixed gas flow direction of the mixed gas supply channel (3); and
when the flame of the backfire travels into an area in the mixed gas supply channel (3) facing the opening (62a), light of the flame is configured to be detected by the flame sensor (5, 5B).

4. The combustion apparatus (C, Ca, Cb) according to claim 1, wherein
the mixed gas supply channel (3) comprises:
a first area (S1), as an area close to an end that is adjacent to an entire area of the combustion part (4) so that the mixed gas is supplied to the entire area of the combustion part (4); and
a second area (S2), having a smaller width than the first area (S1), connected to one end in a width direction of the first area (S1), arranged in a position shifted from a center of the combustion part (4) in the width direction, and allowing the mixed gas to flow toward the first area (S1), wherein
the flame sensor (5, 5B) is arranged in a position corresponding to the second area (S2) and offset from the combustion part (4) in the width direction, and is able to, when a flame of a backfire travels into the second area (S2), detect light of the flame.

5. The combustion apparatus (C, Ca, Cb) according to claim 4, wherein
the shielding part (6, 6A, 6B) comprises a cover member (63) that surrounds a periphery of the flame sensor (5, 5B) and partially has an opening (62a) that opens toward the second area (S2); and
when the flame of the backfire travels into a position in the second area (S2) facing the opening (62a), light of the flame is configured to be detected by the flame sensor (5, 5B).

6. The combustion apparatus (C, Ca, Cb) according to claim 4, wherein
the shielding part (6, 6A, 6B) comprises a holder (64) that holds the flame sensor (5, 5B); and
the holder (64) is able to prevent the flame of the backfire and the light of the flame during normal combustion of the combustion part (4) from traveling directly to the flame sensor (5, 5B), and enables light of the flame of the backfire that has traveled to the second area (S2) to reach the flame sensor (5, 5B) and be detected.

7. The combustion apparatus (C, Ca, Cb) according to claim 1, wherein
the combustion part (4) is composed using a combustion plate (40) having a plurality of burner ports (40a), and is arranged at an end part of the mixed gas supply channel (3).

8. The combustion apparatus (C, Ca, Cb) according to claim 7, comprising:
a case (1), having the mixed gas supply channel (3) formed inside, wherein
the combustion plate (40) is supported by a support wall (68) of a frame shape in a portion in the case (1) that corresponds to the end part of the mixed gas supply channel (3), and a periphery of the combustion plate (40) is closed by the support wall (68).

9. The combustion apparatus (C, Ca, Cb) according to claim 8, wherein
the flame sensor (5, 5B) is inserted into the case (1) from outside so as to penetrate a sidewall (10) of the case (1), and is arranged in a position overlapping the support wall (68) in a vertical height direction while not overlapping the combustion part (4); and
the shielding part (6, 6A, 6B) comprises a partition wall (60) standing up in the vertical height direction from the support wall (68) so as to provide a partition between the combustion part (4) and the flame sensor (5, 5B).

10. A hot water apparatus (WH, WHa, WHb), comprising the combustion apparatus (C, Ca, Cb) according to claim 1.

## Patentansprüche

1. Verbrennungsvorrichtung (C, Ca, Cb), umfassend:
ein Verbrennungsteil (4) zum Verbrennen von Brenngas;
einen Mischgaszufuhrkanal (3) zum Zuführen eines Mischgases aus dem Brenngas und Luft zu dem Verbrennungsteil (4); und
einen Flammensensor (5, 5B), der an einer Stelle innerhalb des Mischgaszufuhrkanals (3) oder gegenüber dem Mischgaszufuhrkanal (3) vorgesehen ist und im Falle einer Rückzündung von dem Verbrennungsteil (4) in den Mischgaszufuhrkanal (3) eine Flamme der Rückzündung optisch erfassen kann;
wobei die Verbrennungsvorrichtung (C, Ca, Cb) **dadurch gekennzeichnet ist, dass** sie ferner umfasst:
ein Abschirmteil (6, 6A, 6B), das verhindert, dass die Flamme der Rückzündung von dem Verbrennungsteil (4) zu dem Flammensensor (5, 5B) gelangt, und das verhindert, dass Licht einer Flamme während der normalen Verbrennung von dem Verbrennungsteil (4) zu dem Flammensensor (5, 5B) gelangt.

2. Verbrennungsvorrichtung (C, Ca, Cb) nach Anspruch 1, wobei
das Abschirmteil (6, 6A, 6B) eine Trennwand (60) umfasst, die vorgesehen ist, um eine Trennung zwischen dem Verbrennungsteil (4) und dem Flammensensor (5, 5B) zu bereitzustellen.

3. Verbrennungsvorrichtung (C, Ca, Cb) nach Anspruch 1, wobei
das Abschirmteil (6, 6A, 6B) ein Abdeckelement (63) umfasst, das einen Umfang des Flammensensors (5, 5B) umgibt und teilweise eine Öffnung (62a) aufweist, die sich in einer Mischgasströmungsrichtung des Mischgaszufuhrkanals (3) zu der stromaufwärtigen Seite hin öffnet; und
wenn die Flamme der Rückzündung in einen Bereich in dem Mischgaszufuhrkanal (3) gelangt, der der Öffnung (62a) zugewandt ist, ist das Licht der Flamme so konfiguriert, dass es von dem Flammensensor (5, 5B) erfasst wird.

4. Verbrennungsvorrichtung (C, Ca, Cb) nach Anspruch 1, wobei
der Mischgaszufuhrkanal (3) umfasst:
einen ersten Bereich (S1) als einen Bereich nahe einem Ende, der an den gesamten Bereich des Verbrennungsteils (4) angrenzt, so dass das Mischgas dem gesamten Bereich des Verbrennungsteils (4) zugeführt wird; und
einen zweiten Bereich (S2), der eine geringere Breite als der erste Bereich (S1) aufweist, mit einem Ende in einer Breitenrichtung des ersten Bereichs (S1) verbunden ist, an einer Position angeordnet ist, die in der Breitenrichtung gegenüber einer Mitte des Verbrennungsteils (4) versetzt ist, und ermöglicht, dass das Mischgas in Richtung des ersten Bereichs (S1) strömt, wobei
der Flammensensor (5, 5B) an einer dem zweiten Bereich (S2) entsprechenden Position und in der Breitenrichtung versetzt von dem Verbrennungsteil (4) angeordnet ist und in der Lage ist, Licht der Flamme zu erfassen, wenn eine Flamme einer Rückzündung in den zweiten Bereich (S2) gelangt.

5. Verbrennungsvorrichtung (C, Ca, Cb) nach Anspruch 4, wobei
das Abschirmteil (6, 6A, 6B) ein Abdeckelement (63) umfasst, das einen Umfang des Flammensensors (5, 5B) umgibt und teilweise eine Öffnung (62a) aufweist, die sich in Richtung des zweiten Bereichs (S2) hin öffnet; und
wenn die Flamme der Rückzündung in eine der Öffnung (62a) zugewandte Position in dem zweiten Bereich (S2) gelangt, ist das Licht der Flamme so konfiguriert, dass es von dem Flammensensor (5, 5B) erfasst wird.

6. Verbrennungsvorrichtung (C, Ca, Cb) nach Anspruch 4, wobei
das Abschirmteil (6, 6A, 6B) einen Halter (64) umfasst, der den Flammensensor (5, 5B) hält; und
der Halter (64) in der Lage ist, zu verhindern, dass die Flamme der Rückzündung und das Licht der Flamme während der normalen Verbrennung des Verbrennungsteils (4) direkt zu dem Flammensensor (5, 5B) gelangen, und ermöglicht, dass das Licht der Flamme der Rückzündung, das in den zweiten Bereich (S2) gelangt ist, den Flammensensor (5, 5B) erreicht und erfasst wird.

7. Verbrennungsvorrichtung (C, Ca, Cb) nach Anspruch 1, wobei
das Verbrennungsteil (4) unter Verwendung einer Verbrennungsplatte (40) mit einer Vielzahl von Brenneröffnungen (40a) gebildet ist und an einem Endteil des Mischgaszufuhrkanals (3) angeordnet ist.

8. Verbrennungsvorrichtung (C, Ca, Cb) nach Anspruch 7, umfassend:
ein Gehäuse (1), in dessen Innerem der Mischgaszufuhrkanal (3) ausgebildet ist, wobei
die Verbrennungsplatte (40) durch eine rahmenförmige Stützwand (68) in einem Abschnitt in dem Gehäuse (1) gehalten wird, der dem Endteil des Mischgaszufuhrkanals (3) entspricht, und ein Umfang der Verbrennungsplatte (40) durch die Stützwand (68) geschlossen ist.

9. Verbrennungsvorrichtung (C, Ca, Cb) nach Anspruch 8, wobei
der Flammensensor (5, 5B) von außen in das Gehäuse (1) eingeführt ist, so dass er eine Seitenwand (10) des Gehäuses (1) durchdringt, und an einer Position angeordnet ist, die die Stützwand (68) in einer vertikalen Höhenrichtung überlappt, ohne dabei das Verbrennungsteil (4) zu überlappen; und
das Abschirmteil (6, 6A, 6B) eine Trennwand (60) umfasst, die sich in der vertikalen Höhenrichtung von der Stützwand (68) nach oben erhebt, um eine Trennung zwischen dem Verbrennungsteil (4) und dem Flammensensor (5, 5B) zu bilden.

10. Warmwasservorrichtung (WH, WHa, WHb), umfassend die Verbrennungsvorrichtung (C, Ca, Cb) nach Anspruch 1.

## Revendications

1. Dispositif de combustion (C, Ca, Cb) comprenant :
une partie de combustion (4), destinée à brûler du gaz combustible ;un canal d'alimentation en gaz mélangé (3), destiné à fournir un mélange de gaz combustible et d'air à la partie de combustion (4) ; et
un capteur de flamme (5, 5B), disposé à un emplacement à l'intérieur du canal d'alimentation en gaz mélangé (3) ou en face de celui-ci, et capable, en cas de retour de flamme de la partie de combustion (4) vers le canal d'alimentation en gaz mélangé (3), de détecter optiquement la flamme de ce retour de flamme ;l'dispositif de combustion (C, Ca, Cb) étant **caractérisé en ce qu'**il comprend en outre :une partie de protection (6, 6A, 6B), empêchant la flamme du retour de flamme d'atteindre le capteur de flamme (5, 5B) depuis la partie de combustion (4), et empêchant la lumière d'une flamme pendant la combustion normale de se propager de la partie de combustion (4) vers le capteur de flamme (5, 5B).

2. Dispositif de combustion (C, Ca, Cb) selon la revendication 1, dans lequel la partie de protection (6, 6A, 6B) comprend une paroi de séparation (60) prévue pour former une séparation entre la partie de combustion (4) et le capteur de flamme (5, 5B).

3. Dispositif de combustion (C, Ca, Cb) selon la revendication 1, dans lequel la partie de protection (6, 6A, 6B) comprend un élément de couvercle (63) qui entoure la périphérie du capteur de flamme (5, 5B) et comporte partiellement une ouverture (62a) qui s'ouvre vers un côté amont dans le sens d'écoulement du gaz mélangé du canal d'alimentation en gaz mélangé (3) ; et lorsque la flamme du retour de flamme se propage dans une zone du canal d'alimentation en gaz mélangé (3) faisant face à l'ouverture (62a), la lumière de la flamme est configurée pour être détectée par le capteur de flamme (5, 5B).

4. Dispositif de combustion (C, Ca, Cb) selon la revendication 1, dans lequel le canal d'alimentation en gaz mélangé (3) comprend :une première zone (S1), en tant que zone proche d'une extrémité adjacente à l'ensemble de la zone de la partie de combustion (4) de sorte que le gaz mélangé est fourni à l'ensemble de la zone de la partie de combustion (4) ; et une deuxième zone (S2), ayant une largeur inférieure à celle de la première zone (S1), reliée à une extrémité dans le sens de la largeur de la première zone (S1), disposée dans une position décalée par rapport au centre de la partie de combustion (4) dans le sens de la largeur, et permettant au gaz mélangé de s'écouler vers la première zone (S1), dans lequel le capteur de flamme (5, 5B) est disposé dans une position correspondant à la deuxième zone (S2) et décalé par rapport à la partie de combustion (4) dans le sens de la largeur, et est capable, lorsqu'une flamme d'un retour de flamme se propage dans la deuxième zone (S2), de détecter la lumière de la flamme.

5. Dispositif de combustion (C, Ca, Cb) selon la revendication 4, dans lequel la partie de protection (6, 6A, 6B) comprend un élément de couvercle (63) qui entoure la périphérie du capteur de flamme (5, 5B) et comporte partiellement une ouverture (62a) qui s'ouvre vers la deuxième zone (S2) ; et lorsque la flamme du retour de flamme se propage jusqu'à une position dans la deuxième zone (S2) faisant face à l'ouverture (62a), la lumière de la flamme est configurée pour être détectée par le capteur de flamme (5, 5B).

6. Dispositif de combustion (C, Ca, Cb) selon la revendication 4, dans lequel la partie de protection (6, 6A, 6B) comprend un support (64) qui maintient le capteur de flamme (5, 5B) ; et le support (64) est capable d'empêcher la flamme du retour de flamme et la lumière de la flamme pendant la combustion normale de la partie de combustion (4) de se propager directement vers le capteur de flamme (5, 5B), et permet à la lumière de la flamme du retour de flamme qui s'est propagée vers la deuxième zone (S2) d'atteindre le capteur de flamme (5, 5B) et d'être détectée.

7. Dispositif de combustion (C, Ca, Cb) selon la revendication 1, dans lequel la partie de combustion (4) est constituée d'une plaque de combustion (40) comportant une pluralité d'orifices de brûleur (40a), et est disposée à une extrémité du canal d'alimentation en gaz mélangé (3).

8. Dispositif de combustion (C, Ca, Cb) selon la revendication 7, comprenant :un boîtier (1), dans lequel est formé le canal d'alimentation en gaz mélangé (3), dans lequel la plaque de combustion (40) est supportée par une paroi de support (68) en forme de cadre dans une partie du boîtier (1) qui correspond à la partie d'extrémité du canal d'alimentation en gaz mélangé (3), et une périphérie de la plaque de combustion (40) est fermée par la paroi de support (68).

9. Dispositif de combustion (C, Ca, Cb) selon la revendication 8, dans lequel le capteur de flamme (5, 5B) est inséré dans le boîtier (1) depuis l'extérieur de manière à traverser une paroi latérale (10) du boîtier (1), et est disposé dans une position chevauchant la paroi de support (68) dans le sens vertical en hauteur sans chevaucher la partie de combustion (4) ; et la partie de protection (6, 6A, 6B) comprend une paroi de séparation (60) s'élevant dans le sens vertical à partir de la paroi de support (68) de manière à former une séparation entre la partie de combustion (4) et le capteur de flamme (5, 5B).

10. Dispositif à eau chaude (WH, WHa, WHb), comprenant l'dispositif de combustion (C, Ca, Cb) selon la revendication 1.
